# FASCICULE DE BREVET EUROPEEN

(11) **EP 3 853 766 B1**
(45) Date de publication et mention de la délivrance du brevet: **01.04.2026**
(21) Numéro de dépôt: 19794248.5
(22) Date de dépôt: 19.09.2019
(51) Int. Cl.: G06V 20/13, G06V 20/56, B64U 101/30

(54) **MÉTHODE ET DISPOSITIF DE SUIVI ET D'EXPLOITATION D'AU MOINS UN PARAMÈTRE ENVIRONNEMENTAL**
VERFAHREN UND VORRICHTUNG ZUR VERFOLGUNG UND NUTZUNG MINDESTENS EINES UMGEBUNGSPARAMETERS
METHOD AND DEVICE FOR TRACKING AND EXPLOITING AT LEAST ONE ENVIRONMENTAL PARAMETER

(30) Priorité: 20.09.2018 WO PCT/IB2018/057252
(43) Date de publication de la demande: 28.07.2021
(73) Titulaire: Cortexia SA, 1618 Châtel-St-Denis (CH)
(72) Inventeur: DROUX, André, 1614 Granges-Veveyse (CH); VON KAENEL, Andreas, 1302 Vufflens-la-Ville (CH)
(74) Mandataire: Grosfillier, Philippe
(86) Numéro de dépôt international: PCT/IB2019/057921
(87) Numéro de publication internationale: WO 2020/058905

(56) Documents cités:
- US-A1- 2018 074 496
- JEONGMIN JEON ET AL: "Autonomous robotic street sweeping: Initial attempt for curbside sweeping", 2017 IEEE INTERNATIONAL CONFERENCE ON CONSUMER ELECTRONICS (ICCE), IEEE, 8 January 2017 (2017-01-08), pages 72 - 73, XP033082713, [retrieved on 20170329], DOI: 10.1109/ICCE.2017.7889234
- WENRUI LI ET AL: "A Mutilple-Level Assessment System for Smart City Street Cleanliness", PROCEEDINGS OF THE 30TH INTERNATIONAL CONFERENCE ON SOFTWARE ENGINEERING AND KNOWLEDGE ENGINEERING, vol. 2018, 1 July 2018 (2018-07-01), pages 256 - 303, XP055652849, ISSN: 2325-9000, ISBN: 978-1-891706-44-8, DOI: 10.18293/SEKE2018-101

## Description

### Domaine de l'invention

L'invention se situe dans le domaine de la planification, de la mesure, du suivi et des actions activables grâce à l'analyse de paramètres environnementaux détectés au moyen d'une caméra, tels que la propreté en milieu urbain.

### Etat de la technique

La détection de propreté en milieu urbain est notamment décrite dans les demandes de brevet CN 106203498 et CN 106845408.

Les méthodes de détection ou d'analyse de propreté sont notamment décrites par les associations nationales actives contre le littering.

MOHAMMAD SAEED RAD ET AL: "A Computer Vision System to Localize and Classify Wastes on the Streets", ARXIV.ORG, 31 octobre 2017 (2017-10-31), DOI: 10.1007/978-3-319-68345-4_18, décrit une application de vision par ordinateur entièrement automatisée pour la quantification des déchets, basée sur l'apprentissage profond pour localiser et classer différents types de déchets et basée sur des images prises dans des rues et sur des trottoirs par un système d'acquisition d'images composé d'une caméra haute résolution, montée sur le toit d'un véhicule.

US 2018/074496 A1 concerne l'utilisation de drones pour la collecte et la gestion des déchets.

WENRUI LI ET AL: "A Mutilple-Level Assessment System for Smart City Street Cleanliness", PROCEEDINGS OF THE 30TH INTERNATIONAL CONFERENCE ON SOFTWARE ENGINEERING AND KNOWLEDGE ENGINEERING, vol. 2018, 1 juillet 2018 (2018-07-01), pages 256-303, ISSN: 2325-9000, DOI: 10.18293/SEKE2018-101 ISBN: 978-1-891706-44-8, propose un système d'évaluation à plusieurs niveaux sur la façon dont l'état de propreté des rues est collecté à l'aide de stations mobiles, connectées au réseau de la ville, analysées dans le cloud et présentées aux administrateurs municipaux en ligne ou sur mobile.

JEONGMIN JEON ET AL: "Autonomous robotic street sweeping: Initial attempt for curbside sweeping", 2017 IEEE INTERNATIONAL CONFERENCE ON CONSUMER ELECTRONICS (ICCE), IEEE, 8 janvier 2017 (2017-01-08), pages 72-73, DOI: 10.1109/ICCE.2017.7889234, présente une balayeuse robotisée autonome. développée en robotisant une balayeuse manuelle commercialisé et en l'équipant de deux caméras fisheye pour la détection environnementale.

### Description générale de l'invention

La présente invention constitue une amélioration par rapport aux systèmes et méthodes de l'état de la technique.

L'invention est définie par les revendications en annexe.

L'invention concerne également un dispositif qui utilise la méthode précitée.

Dans le présent document, par « paramètre environnemental » on entend un élément variable naturel ou résultant de l'activité humaine, animale ou végétale, que l'on peut détecter au moyen d'au moins une caméra.

La caméra selon l'invention fonctionne de préférence dans le domaine visible mais son utilisation n'est pas limitée à ce domaine du spectre électromagnétique. Elle peut p.ex. fonctionner, alternativement ou en sus du visible, dans l'infrarouge (p.ex. pour la mesure de températures) ou l'ultraviolet (p.ex. pour l'analyse du rayonnement UV).

Le dispositif selon l'invention est constitué d'au moins une caméra disposée dans un véhicule, p.ex. un vélo, une balayeuse, un drone ou sur un élément fixe, p.ex. un lampadaire. La caméra est reliée à une unité centrale disposée sur le véhicule, le support statique ou en un lieu distant. L'unité centrale traite les images en temps réel. Les images sont analysées par des bases de données situées sur des serveurs, p.ex. dans le cloud, et grâce à des algorithmes, des éléments (p.ex. des déchets) sont identifiés, classés, géolocalisés et présentés sur une interface de suivi, des rapports de résultats d'analyses par période et par type d'information sélectionnée.

### Description détaillée de l'invention

L'invention est décrite de manière plus détaillée dans ce chapitre, au moyen d'exemples illustrés par les figures suivantes :
La figure 1 illustre la méthode selon l'invention appliquée à l'amélioration de la propreté.

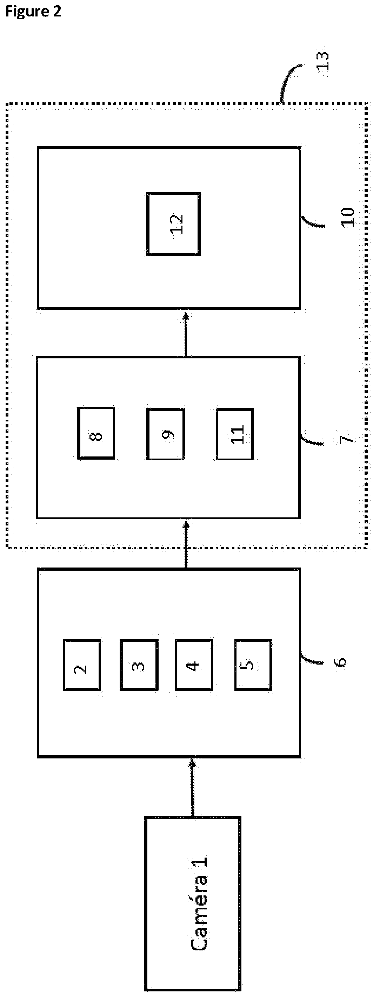

La figure 2 représente le dispositif et les étapes de valorisation des images.
La figure 3 représente les éléments contenus dans l'unité centrale du dispositif
La figure 4 représente le suivi de la propreté d'une ville au cours du temps.

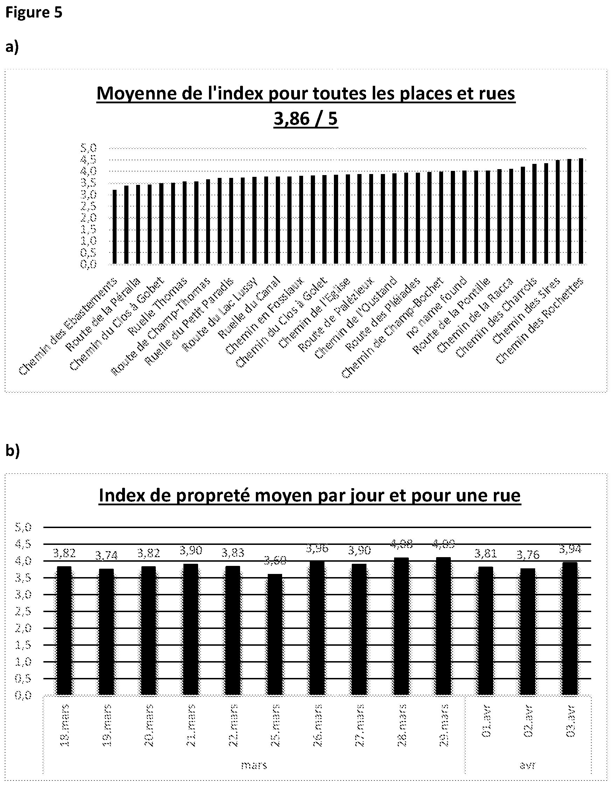

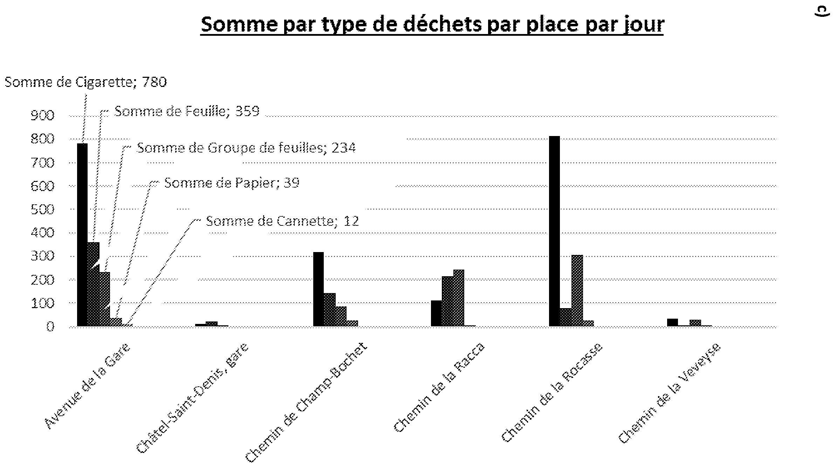

La figure 5 illustre divers types de rapport sur la propreté d'une ville.
La figure 6 illustre une variante de l'invention dans laquelle une caméra est fixée sur une balayeuse.
La figure 7 montre un exemple de visualisation de la saleté par une balayeuse.
La figure 8 montre un autre exemple de visualisation de la saleté par une balayeuse.
La figure 9 illustre un exemple servant de base pour un outil d'amélioration en continu en présentant les causes de l'influence des types de déchets sur un index de propreté et donc les typologies de déchets sur lesquels il faut travailler.
La figure 10 illustre l'index de propreté par lieu (rues et places), classé de façon croissante, de la rue la plus sale à la rue la plus propre.

Les exemples discutés ci-après concernent l'analyse et le suivi de la propreté en milieu urbain.

Bien entendu, l'invention ne se limite pas à ce domaine.

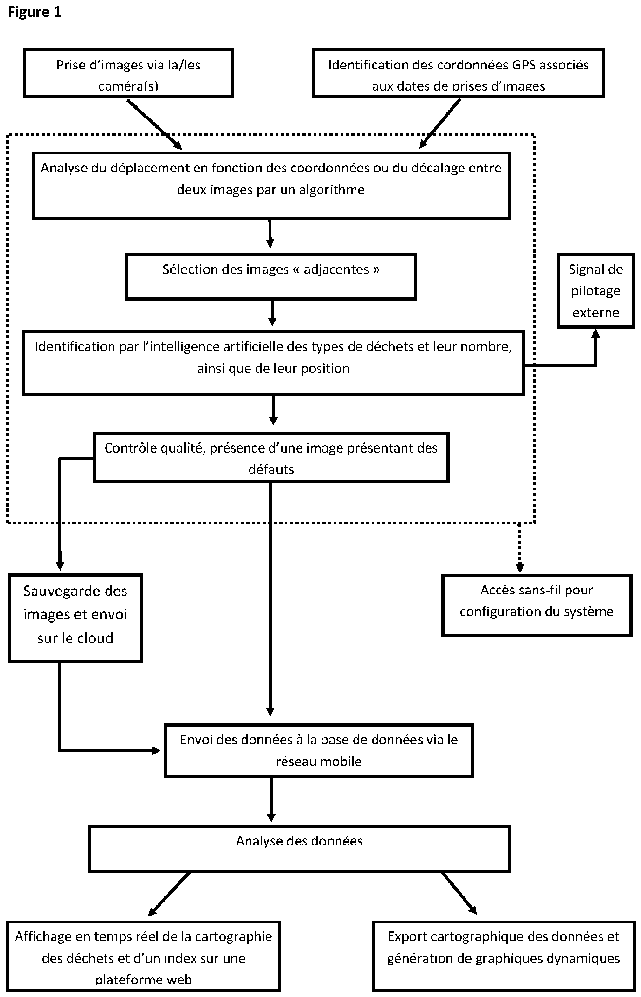

Les différentes étapes de la méthode selon l'invention sont décrites dans la figure 1.

La caméra 1 est fixée à l'extérieur, sur une perche, sur une porte, sur un pare-brise d'un véhicule ou d'un objet mobile comme un vélo. La caméra 1 est reliée à une unité de centrale 6 disposée à proximité de la caméra, p.ex. dans le véhicule, ou dans un lieu distant. La caméra 1 étant reliée à l'unité centrale 6 par une connexion filaire sur un module power of Ethernet 17. Alternativement, la liaison caméra 1 - unité centrale 6 est sans fil.

L'unité centrale 6 (Hardware) est constituée d'un ordinateur 2 (un processeur 15, un Broker, une intelligence artificielle, une gestion du réseau et une gestion de la tension). Une batterie interne 21 optionnelle, si l'unité centrale est sur le véhicule ou sur le même support que la caméra 1, permet le traitement de données grâce à une mémoire tampon dès le moment où l'alimentation externe 19 est coupée.

La gestion du réseau se fait par une unité dédiée 3 afin d'accéder aux données à distance et les envoyer.

La géolocalisation est réalisée par une partie 4 de l'unité centrale 6, par le biais d'une l'antenne 18.

Une autre partie 5 de l'unité centrale 6 est un système de transmission sans fil qui permet notamment d'effectuer la configuration du système.

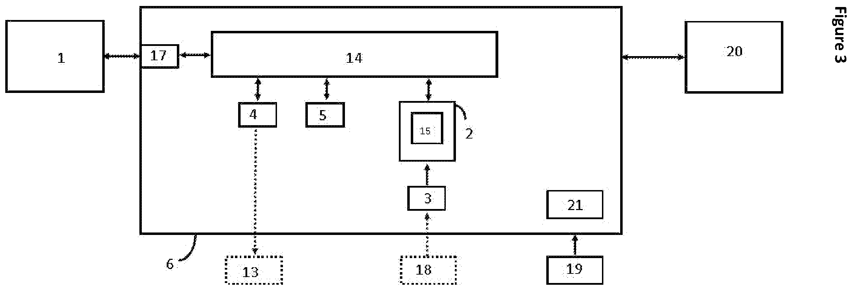

D'autres éléments 17, 4, 5 et 2 illustrés sur la figure 3 sont reliés à un module de routage 14.

L'unité centrale 6 peut transmettre des signaux de commande à l'unité de gestion d'énergie notamment de la balayeuse. L'unité centrale 6 peut transmettre ses données à des serveurs 13. Ces derniers sont constitués d'un serveur « front end » 10 et d'un serveur « back end » 7. Le serveur « front end » gère la cartographie et le suivi 12 alors que le serveur « back end » 7 gère la base de données 8, les analyses de données 9 et les comptes rendus 11.

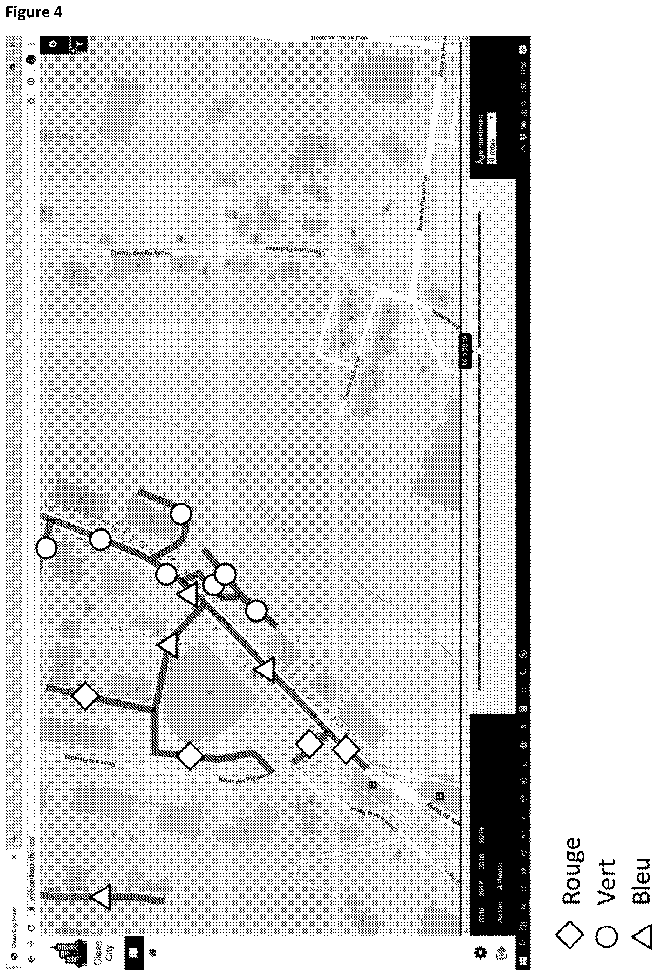

Une cartographie de la propreté d'une ville peut être établie (voir figure 4) avec une classification et une répartition des différents types de déchets selon un suivi 12 ou selon des fichiers de données et d'analyses sous la forme de rapports ou de comptes rendus 11.

Les traits avec les triangles, les ronds et les carrés représentent le niveau de saleté de chaque rue. Les points gris représentent chaque point géolocalisé sur lesquels au moins un déchet a été identifié, sélectionné et géopositionné. Le suivi peut être représenté en temps réel. Son utilisation est principalement axée sur l'information journalière ou à un temps donné (par exemple le 23 avril 2018, à 13h00).

Les éléments représentés sont paramétrables, ainsi que le nombre, le type de déchets qui sont présentés.

Cette information comprend différentes analyses qui sont représentées avec différentes sortes de diagrammes qui permettent selon l'utilisation des données, leur valorisation, leur compréhension ou interprétation afin d'offrir à l'utilisateur la possibilité de prendre des décisions d'amélioration continue.

Des algorithmes d'analyse permettent de valoriser les résultats des détections en proposant, avantageusement de manière automatique, des améliorations continues, comme par exemple l'analyse de la distance idéale entre des poubelles en lien avec la propreté mesurée.

Le dispositif selon l'invention peut également être aisément intégré dans les installations de balayage existantes.

La mesure de la propreté urbaine permet d'évaluer et de diagnostiquer la propreté d'une ville, de l'améliorer tout en réduisant les coûts et les impacts sur l'environnement dus aux détritus.

L'invention offre la possibilité de mesurer en continu la propreté urbaine et à restituer sur une cartographie l'impact des déchets d'une ville.

L'invention permet également de planifier les mesures, puis de les évaluer et les présenter, d'agir et mettre en place des leviers d'actions (amélioration continue) pour rendre la ville plus propre.

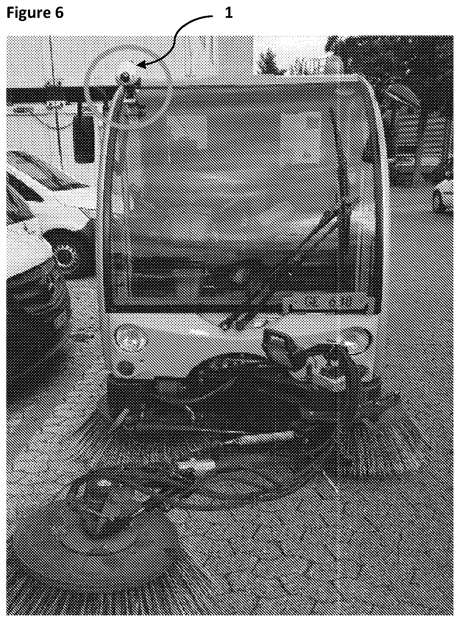

La figure 6 illustre un exemple de réalisation de l'invention dans lequel une caméra est fixée sur une balayeuse.

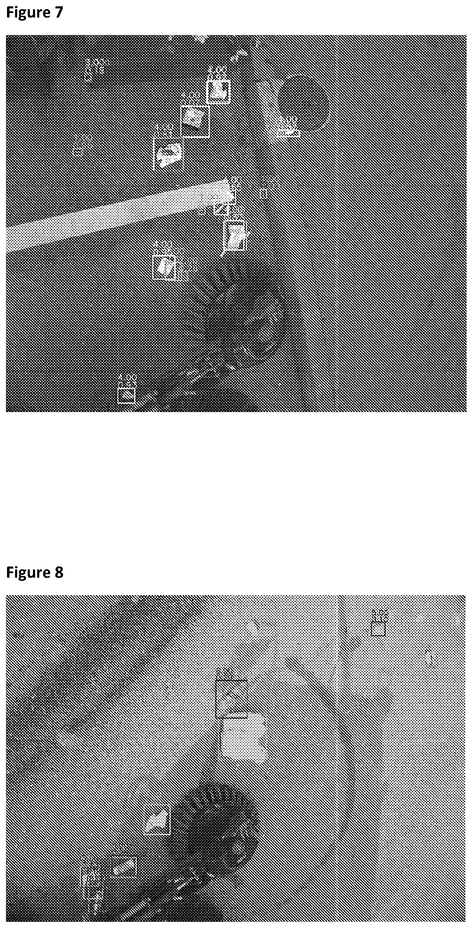

Le dispositif selon l'invention permet de visualiser la saleté devant l'installation mobile d'aspiration (voir figures 7 et 8) et à l'aide d'une caméra, de p.ex. réguler la puissance d'aspiration afin de limiter la consommation d'énergie du système (ne pas utiliser le 100% de la puissance pour ramasser une cigarette par exemple, mais seulement 10%).

Le système selon l'invention mesure les déchets urbains de manière objective et automatique. Des caméras sont placées sur les balayeuses de la ville. Des algorithmes, p.ex. de réseaux neuronaux, identifient, classent et comptent les déchets et transmettent ces données en temps réel.

Chaque élément reconnu (mégot, emballage, crotte, etc....) est géolocalisé et classifié.

Une balayeuse est conçue pour le balayage des trottoirs, des routes et des parcs de commune. Les salissures à balayer sont de tout ordre, spécifique au milieu urbain : feuilles mortes, papiers gras, bouteilles, mégots, chewing-gum etc. Les types de revêtement de sols sont également très variés, des plus résistants aux plus fragiles : enrobé, pavés, dalles en pierre, etc.

Un système d'aspiration et de balayage se décomposent le plus souvent en 11 éléments :
1. Un réservoir d'eau
2. Une benne à détritus
3. Une pompe à eau
4. Des buses d'aspersion
5. Une bouche d'aspiration
6. Un tuyau d'aspiration
7. Des tamis
8. Une turbine (soufflante)
9. Des tamis latéraux et frontaux
10. Des ouvertures de vidanges
11. Des balais

Il existe différents systèmes d'aspiration et de balayage. Les différences sont minimes mais le fonctionnement reste principalement le même.

Le réservoir d'eau est rempli avant le balayage. La benne à détritus contient également un peu d'eau afin de « coller » la poussière par humidification.

La pompe à eau permet d'alimenter les buses d'aspersion du balai en eau. Elles fonctionnent à la demande. Ainsi certains déchets peuvent être humidifiés au besoin et sont ramassés par deux balais tournant en sens inverses.

La soufflante de la benne génère une dépression qui aspire les déchets par la bouche d'aspiration. L'eau de recirculation est pulvérisée afin de faire glisser plus facilement les déchets du tuyau d'aspiration à la benne. Juste avant l'arrivée des déchets dans la benne, l'air, l'eau et les déchets sont séparés.

L'air circule à travers des tamis et est évacuée par la soufflante entraînée hydrauliquement. L'eau est séparée et s'écoule dans le réservoir d'eau de recirculation via les tamis latéraux et frontaux. Une fois parvenue dans le réservoir, l'eau est ramenée à la bouche d'aspiration au moyen d'une pompe de recirculation.

L'invention offre notamment des avantages dans les domaines suivants :

### 1. Optimisation du balayage

La balayeuse est capable d'adapter sa demande en énergie en fonction de la quantité de déchets détectée, analysée et cartographiée. Le système peut dès lors savoir s'il est nécessaire d'utiliser plus ou moins d'eau par les buses d'aspersion, augmenter ou diminuer la puissance du générateur d'énergie et/ou de la bouche d'aspiration, gérer la vitesse de rotation des balais, etc.

Le système d'entraînement de la turbine qui réagit selon les déchets impact le moteur thermique (ou électrique), la pompe hydraulique, le moteur hydraulique ainsi que tout le système entraînant la turbine.

La balayeuse s'adapte donc à son environnement et peut ainsi avoir une meilleure efficience du pilotage de la turbine d'aspiration, Elle fonctionne selon les besoins extérieurs et non plus selon un modèle prédéfinit et non adaptable.

### 2. Diminution de l'usure des balayeuses

Le dispositif selon l'invention permet d'utiliser les outils de la balayeuse au moment opportun avec la puissance adéquate.

La durée de vie d'une balayeuse est entre 8 ou 10 ans, respectivement de 7'000 à 10'000 heures de fonctionnement en moyenne. L'usure est due à son utilisation intensive. L'introduction du software de Cortexia permet de savoir quel type de déchets, quelle quantité et où ils se trouvent.

Cette adaptation permet de réduire de manière significative l'usure des balayeuses à différents niveaux : les balais brosses, les tubes d'aspiration, les joints d'étanchéité, les filtres, la bouche d'aspiration etc.

Il y a donc une prolongation de la durée de vie des pièces ainsi qu'une réduction des services à faire.

### 3. Optimisation de la consommation

La balayeuse n'a plus besoin de fonctionner à plein régime continuellement. Il y a une diminution du l'utilisation du moteur, qui permet de diminuer la consommation d'énergie fossile ou électrique qui en finalité rejette moins de polluants.

La quantité d'eau utilisée est régulée selon les besoins : le type et la quantité de déchets. Tous n'ont pas besoin d'être humidifiés. Il est donc possible de consommer moins d'eau, ce qui permet d'espacer de manière plus optimale les « aller-retour » pour remplir la cuve d'eau et ainsi diminuer la consommation d'énergie thermique.

### 4, Détection des éléments dangereux et tri

Les données récoltées par le dispositif de l'invention permettent aux milieux sévères et exigeant face à la propreté de détecter les éléments aspirés et de les connecter avec leur source. Si l'on prend l'exemple d'un aéroport, la détection de pièces sur le tarmac référées à des types d'avions. Dans la même ligne, les balayeuses sont également capables de trier les déchets accumulés en fonction de paramètres définis comme la dangerosité, la sécurité, la nécessité de recycler.

### 5. Optimisation du trajet des balayeuses

Le parcours des balayeuses peut être programmé, et suivi manuellement ou automatiquement, en fonction de paramètres tels que le niveau de saleté, le type de déchet, le lieu, la distance au vidangeur ou la densité du trafic. De la sorte, les balayeuses se déplacent « intelligemment » le long de routes dont la propreté nécessite effectivement être améliorée. On évite ainsi le déplacement parfois inutile de balayeuses selon un trajet et un horaire prédéfini.

### 6. Analyse des parcours des balayeuses /Exploitation des données

Les algorithmes selon l'invention permettent d'utiliser les données récoltées pour réaliser une cartographie de la ville et ainsi fournir des rapports périodiques. Ils permettent d'objectiver la propreté et d'identifier les axes d'interventions (par exemple, les lieux et les déchets critiques).

Un historique (espace et temps) est créé et permet de savoir si les jours, la durée et les lieux de nettoyage sont pertinents. Il est ainsi possible de s'adapter aux besoins réels.

### 7. Optimisation des ressources

Les données récoltées par le dispositif de l'invention permettent au service de voirie non pas de nettoyer plus lorsque c'est sale, mais de nettoyer mieux.

Un index traduit la perception de la propreté sur une échelle de 0 (sale) à 5 (propre). La ville de Zürich par exemple fixe un objectif de 3,5 à 3,7. Les quartiers qui sont systématiquement en-dessus de cet objectif sont trop propres. La ville va réallouer ces ressources aux zones qui se trouvent en-dessous de l'objectif.

Les données accumulées permettent d'automatiser cette allocation des ressources et d'optimiser la boucle d'amélioration continue.

La mesure de la propreté telle que proposée peut être exploitée/valorisée en prenant des actions concrètes pour son amélioration dans les villes. Les rapports et la vision en temps réel de la propreté dans un lieu permettent de prendre des actions préventives et correctives 11 et 12

En effet, les leviers d'action pour le maintien de la propreté sont multiples et leurs effets sur la propreté seront mesurables :
a) Mieux informer la population par de la sensibilisation
b) Mieux informer la population par des campagnes ciblées
c) Mieux nettoyer au lieu de plus nettoyer
d) Mieux définir les besoins en termes de ressources techniques de nettoyage
e) Mieux allouer les ressources techniques de nettoyage
f) Mieux valoriser le travail du personnel grâce à la technologie
g) Mieux allouer les ressources en personnel
h) Optimiser les infrastructures
i) Optimiser l'utilisation des machines
j) Optimiser le mobilier urbain
k) Améliorer l'efficience du travail

Ces améliorations offertes par l'invention sont en phase avec la perception des gens, avec les coûts et l'impact environnemental.

Par exemple, on peut évaluer l'impact d'une poubelle propre par rapport à une poubelle sale en % de réduction des détritus et grâce au données accumulées. Avec une poubelle, il est possible d'évaluer les distances moyennes entre deux et en déduire la distance optimale pour une propreté donnée. Il est possible d'évaluer la pertinence du lieu où se trouve la poubelle, l'idéal de forme et la taille de cette dernière afin d'avoir la meilleure efficience en termes d'attractivité, d'entretien, de facilité d'utilisation, de robustesse.

L'algorithme peut prendre en considération des milliers de possibilités d'amélioration continues et chercher l'optimum par situation, pour une perception désirée, un coût, un impact environnemental

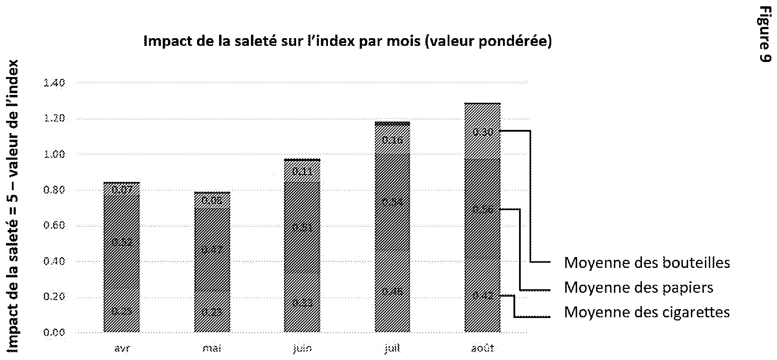

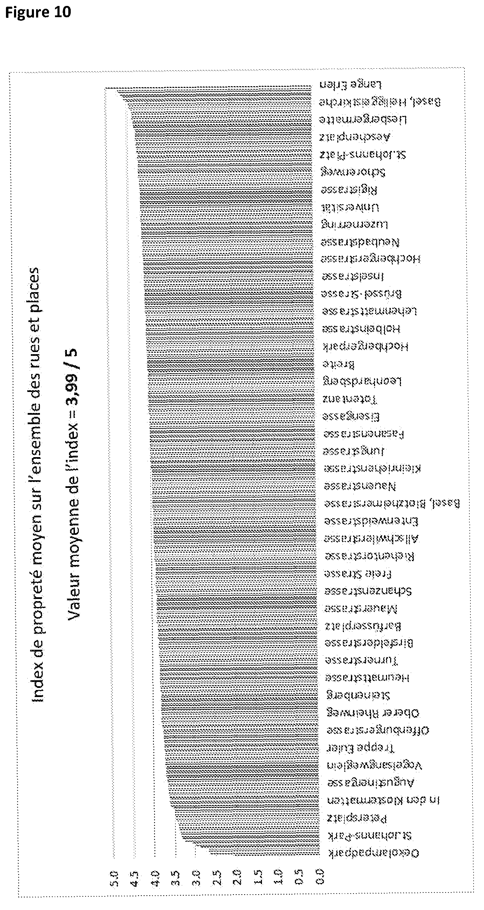

Les figures 9 et 10 illustrent un exemple servant de base pour un outil d'amélioration continu. Sur la figure 9, le diagramme représente le taux de saleté, soit l'inverse de la propreté. Plus le chiffre est grand, plus la saleté est présente et ici avec trois types de déchets dominants dans cette ville, soit le papier en majorité, les cigarettes en second et les bouteilles en troisième. Nous constatons également l'augmentation de ces déchets en fonction de la saison, avec un pic de saleté en août dans cette ville touristique.

Sur la figure 9, on constate l'évolution de la valeur de l'index de propreté sur une période de 5 mois entre avril et août 2019. Les valeurs obtenues montrent des rues plus propres que d'autre (index le plus haut = propre). La méthode permet dès lors d'allouer plus de moyens la où c'est sale, en prenant des ressources la où de la surqualité est constatée (trop propre). La méthode selon l'invention permet d'identifier la solution la plus adéquate pour respecter un objectif qui serait d'équilibrer l'utilisation des ressources en personnel, matériel.

Comme indiqué précédemment, l'invention ne se limite pas à l'analyse et à l'amélioration de la propreté urbaine.

## Revendications

1. Méthode d'analyse et de suivi de la propreté en milieu urbain dans l'objectif d'améliorer la propreté en milieu urbain, ladite méthode comprenant les étapes successives suivantes :
- Planification de mesures automatiques d'au moins un paramètre environnemental en milieu urbain, ledit au moins un paramètre environnemental comprenant un élément variable naturel ou résultant de l'activité humaine ou animale que l'on peut détecter au moyen d'au moins une caméra;
- Suivi en temps réel dudit au moins un paramètre environnemental au moyen d'au moins une caméra embarquée dans un véhicule ou fixée sur un support statique;
- Géolocalisation par une unité centrale reliée à ladite au moins une caméra dudit au moins un paramètre environnemental;
- Classification par l'unité centrale dudit au moins un paramètre environnemental selon ses caractéristiques telles que catégorie, danger ou typologie ;
et
- Amélioration de la propreté en milieu urbain basée sur les données obtenues dans les deux étapes précédentes, comprenant une optimisation de l'utilisation d'au moins une balayeuse et ses ressources naturelles par adaptation de l'eau et de l'électricité utilisées par ladite au moins une balayeuse.

2. Méthode selon la revendication précédente dans laquelle on adapte la demande d'énergie de ladite au moins une balayeuse en fonction de la quantité d'élément variable détectée, analysée et cartographiée.

3. Méthode selon la revendication 2 dans laquelle on adapte la puissance de balayage en fonction du niveau de saleté.

4. Méthode selon la revendication 2 ou 3 dans laquelle on utilise les outils de la balayeuse au moment opportun avec la puissance adéquate en fonction du type d'élément variable, la quantité d'élément variable et l'emplacement de l'élément variable de façon à réduire l'usure des balayeuses.

5. Méthode selon l'une des revendications 2 à 4 dans laquelle on optimise le trajet de ladite a moins une balayeuse en fonction du niveau de saleté, du type de déchets, du lieu, de la distance à un vidangeur ou de la densité du trafic.

6. Méthode selon l'une des revendications précédentes, dans laquelle on optimise la distance entre des poubelles, le lieu où se trouve une poubelle, la forme de la poubelle ou la taille de la poubelle.

7. Méthode selon l'une des revendications 2 à 6, dans laquelle on optimise l'allocation des ressources en personnel.

8. Méthode selon l'une quelconque des revendications précédentes, dans laquelle l'optimisation des ressources est réalisée automatiquement, de manière à induire une boucle d'amélioration continue.

9. Méthode selon l'une des revendications précédentes, dans laquelle on établit une cartographie avec classification et une répartition des différents types de déchets selon un suivi ou selon des fichiers de données et d'analyses sous la forme de rapports ou de comptes rendus.

10. Dispositif comprenant un véhicule ou un support statique doté d'au moins une caméra (1) reliée à une unité centrale (6) disposée sur le véhicule, le support statique ou en un lieu distant ; ladite unité centrale (6) étant configurée pour traiter des images en temps réel, de manière à géolocaliser et classer au moins un paramètre environnemental, ledit dispositif étant configuré pour implémenter la méthode selon la revendication 1.

11. Dispositif selon la revendication précédente, ledit véhicule étant une balayeuse.

12. Dispositif selon la revendication précédente comprenant des moyens d'optimisation de l'aspiration, du balayage, de réduction de l'usure, d'optimisation de la consommation, d'optimisation des trajets et d'analyse des parcours de ladite balayeuse en fonction de la quantité d'éléments variables détectés, analysés et cartographiés.

## Patentansprüche

1. Verfahren zur Analyse und zur Überwachung der Sauberkeit im städtischen Bereich mit dem Ziel, die Sauberkeit im städtischen Bereich zu verbessern, wobei das Verfahren die folgenden aufeinander folgenden Schritte umfasst:
- Planung von automatischen Messungen mindestens eines Umgebungsparameters im städtischen Bereich, wobei der mindestens eine Umgebungsparameter ein natürliches oder auf menschlicher oder tierischer Aktivität beruhendes variables Element umfasst, das mittels mindestens einer Kamera erkannt werden kann;
- Echtzeitüberwachung des mindestens einen Umgebungsparameters mittels mindestens einer Kamera, die in ein Fahrzeug integriert oder an einem statischen Träger befestigt ist;
- Geolokalisierung des mindestens einen Umgebungsparameters durch eine mit der mindestens einen Kamera verbundene Zentraleinheit;
- Klassifizierung des mindestens einen Umgebungsparameters anhand seiner Merkmale wie Kategorie, Gefahr oder Typologie durch die Zentraleinheit;
und
- Verbesserung der Sauberkeit im städtischen Milieu basierend auf den in den beiden vorhergehenden Schritten erhaltenen Daten, umfassend eine Optimierung des Einsatzes mindestens einer Kehrmaschine und ihrer natürlichen Ressourcen durch Anpassung des Wassers und der Elektrizität, die von der mindestens einen Kehrmaschine eingesetzt werden.

2. Verfahren nach dem vorhergehenden Anspruch, wobei der Energiebedarf der mindestens einen Kehrmaschine in Abhängigkeit von der erkannten, analysierten und kartographierten Menge des variablen Elements angepasst wird.

3. Verfahren nach Anspruch 2, wobei die Kehrleistung in Abhängigkeit von dem Verschmutzungsgrad angepasst wird.

4. Verfahren nach Anspruch 2 oder 3, wobei die Werkzeuge der Kehrmaschine zum geeigneten Zeitpunkt mit der adäquaten Leistung in Abhängigkeit von der Art des variablen Elements, der Menge des variablen Elements und dem Platz des variablen Elements eingesetzt werden, so dass der Verschleiß der Kehrmaschinen reduziert wird.

5. Verfahren nach einem der Ansprüche 2 bis 4, wobei die Route der mindestens einen Kehrmaschine in Abhängigkeit vom Verschmutzungsgrad, von der Abfallart, vom Ort, von der Entfernung zu einer Entleereinrichtung oder von der Dichte des Verkehrs optimiert wird.

6. Verfahren nach einem der vorhergehenden Ansprüche, wobei die Entfernung zwischen Mülleimern, der Ort, an dem sich ein Mülleimer befindet, die Form des Mülleimers oder die Größe des Mülleimers optimiert wird.

7. Verfahren nach einem der Ansprüche 2 bis 6, wobei die Zuweisung der personellen Ressourcen optimiert wird.

8. Verfahren nach einem der vorhergehenden Ansprüche, wobei die Optimierung der Ressourcen automatisch ausgeführt wird, so dass eine Schleife zur ständigen Verbesserung induziert wird.

9. Verfahren nach einem der vorhergehenden Ansprüche, wobei eine Kartographie mit Klassifizierung und einer Verteilung der verschiedenen Abfallarten gemäß einer Überwachung oder gemäß Daten- und Analysedateien in Form von Berichten oder Protokollen erstellt wird.

10. Vorrichtung, umfassend ein Fahrzeug oder einen statischen Träger, das bzw. der mit mindestens einer Kamera (1) ausgestattet ist, die mit einer an dem Fahrzeug, dem statischen Träger oder einem entfernten Ort angeordneten Zentraleinheit (6) verbunden ist; wobei die Zentraleinheit (6) dazu ausgestaltet ist, Bilder in Echtzeit zu verarbeiten, so dass mindestens ein Umgebungsparameter geolokalisiert und klassifiziert wird, wobei die Vorrichtung dazu ausgestaltet ist, das Verfahren nach Anspruch 1 zu implementieren.

11. Vorrichtung nach dem vorhergehenden Anspruch, wobei das Fahrzeug eine Kehrmaschine ist.

12. Vorrichtung nach dem vorhergehenden Anspruch, umfassend Mittel zur Optimierung des Saugens, des Kehrens, zur Reduzierung des Verschleißes, zur Optimierung des Verbrauchs, zur Optimierung der Routen und zur Analyse der Strecken der Kehrmaschine in Abhängigkeit von der Menge der erkannten, analysierten und kartographierten variablen Elemente.

## Claims

1. Method for analysing and monitoring cleanliness in an urban environment in order to improve cleanliness in urban environments, said method comprising the following successive steps:
- Planning automatic measurements of at least one environmental parameter in an urban environment, said at least one environmental parameter comprising a variable element that is natural or results from human or animal activity and can be detected using at least one camera;
- Real-time monitoring of said at least one environmental parameter using at least one camera carried on board a vehicle or fastened to a static support;
- Geolocating said at least one environmental parameter using a central unit connected to said at least one camera;
- Classifying, using the central unit, said at least one environmental parameter according to its characteristics such as category, danger or type;
and
- Improving cleanliness in an urban environment based on the data obtained in the two preceding steps, comprising optimization of the use of at least one street sweeper and its natural resources by adapting the water and electricity used by said at least one street sweeper.

2. Method according to the preceding claim, wherein the energy demand of said at least one street sweeper is adjusted as a function of the quantity of variable element detected, analysed and mapped.

3. Method according to Claim 2, wherein the sweeping power is adjusted as a function of the level of dirtiness.

4. Method according to Claim 2 or 3, wherein the tools of the street sweeper are used at the appropriate time with the appropriate power depending on the variable element type, the variable element quantity and the location of the variable element so as to reduce wear on the street sweepers.

5. Method according to one of Claims 2 to 4, wherein the path of said at least one street sweeper is optimized as a function of the level of dirtiness, the type of waste, the location, the distance to an emptying location, or the density of the traffic.

6. Method according to one of the preceding claims, wherein the distance between trash containers, the location of a trash container, the shape of the trash container or the size of the trash container is optimized.

7. Method according to one of Claims 2 to 6, wherein the allocation of staff resources is optimized.

8. Method according to any one of the preceding claims, wherein the optimization of resources is carried out automatically, so as to create a continuous improvement loop.

9. Method according to one of the preceding claims, wherein a map is drawn with classification and distribution of the different types of waste, based on monitoring or on data and analysis files in the form of records or reports.

10. Device comprising a vehicle or a static support provided with at least one camera (1) connected to a central unit (6) arranged on the vehicle, the static support or in a remote location; said central unit (6) being configured to process images in real time, so as to geolocate and classify at least one environmental parameter, said device being configured to implement the method according to Claim 1.

11. Device according to the preceding claim, said vehicle being a street sweeper.

12. Device according to the preceding claim, comprising means for optimizing suction, sweeping, reducing wear, optimizing consumption, optimizing paths and analysing the routes of said street sweeper as a function of the quantity of variable elements detected, analysed and mapped.
